(19) Europäisches Patentamt
European Patent Office
Office européen des brevets

(11) **EP 1 020 781 B1**

(12) **EUROPÄISCHE PATENTSCHRIFT**

(45) Veröffentlichungstag und Bekanntmachung des Hinweises auf die Patenterteilung:
**12.11.2003 Patentblatt 2003/46**

(51) Int Cl.⁷: $G05D\ 23/00$, G05D 19/00, G05D 23/13

(21) Anmeldenummer: **00100302.9**

(22) Anmeldetag: **07.01.2000**

(54) **Steuerungsvorrichtung für eine Fahrzeuginnenraum-Klimaanlage**

Air-conditioner control system for an automobile

Système de contrôle d'une climatisation dans une automobile

(84) Benannte Vertragsstaaten:
**DE ES FR GB IT**

(30) Priorität: **15.01.1999 DE 19901319**

(43) Veröffentlichungstag der Anmeldung:
**19.07.2000 Patentblatt 2000/29**

(73) Patentinhaber: **Hella KG Hueck & Co.**
**59552 Lippstadt (DE)**

(72) Erfinder: **Hussmann, Micha**
**59555 Lippstadt (DE)**

(56) Entgegenhaltungen:
**DE-A- 3 029 097        US-A- 4 434 932**

• **PATENT ABSTRACTS OF JAPAN vol. 1999, no. 01, 29. Januar 1999 (1999-01-29) & JP 10 278537 A (CALSONIC CORP), 20. Oktober 1998 (1998-10-20)**

**Beschreibung**

Die Erfindung betrifft eine Steuerungsvorrichtung für eine Fahrzeuginnenraum-Klimaanlage.

Automatisch arbeitende Klimaanlagen für den Innenraum von Fahrzeugen sind dahingehend ausgelegt, daß die gewünschte Innenraumtemperatur möglichst bald nach dem Starten des Fahrzeuges erreicht wird. Das bedeutet beispielsweise im Sommerbetrieb, wenn der Innenraum des Fahrzeuges aufgrund der hohen Außentemperaturen bzw. der Sonneneinstrahlung überhitzt ist, daß eine möglichst große Menge an kalter Luft in den Innenraum des Fahrzeuges eingeblasen wird. Umgekehrt sind die Verhältnisse im Winterbetrieb, bei dem möglichst warme Luft in möglichst großen Mengen in den Innenraum des Fahrzeuges einströmt, um diesen aufzuheizen. Während dieser Extremzustände einer Fahrzeug-Klimaanlage wird es vom Fahrer und den übrigen Insassen des Fahrzeuges toleriert, daß vom Gebläse eine nicht unbeträchtliche Geräuschentwicklung ausgeht, da das Gebläse im oberen Leistungsbereich arbeitet. Wegen des verhältnismäßig kleinvolumigen Fahrgastraumes im Verhältnis zur Scheibenfläche und den Türen kann sich die Innen raumtemperatur aufgrund äußerer Einflußfaktoren relativ rasch verändern. So reicht beispielsweise im Winter ein kurzes Öffnen der Türen beim Aus- und Einsteigen aus, um die Innenraumtemperatur deutlich abzukühlen. Demgegenüber heizt sich im Sommer bei einem recht kurzzeitigen Abstellen des Fahrzeuges der Innenraum schon nach einigen wenigen Minuten deutlich auf. Dies führt zu klimatisierten Fahrzeugen, deren Klimaphilosophie das schnellstmögliche Ausregeln der Innenraumtemperatur auf den Fahrerwunsch ist, zu einem Hochlaufen des Gebläses auf maximale Gebläsespannung und damit zu den bereits zuvor angesprochenen Geräuschbelästigungen. Auch wenn diese Geräuschbelästigungen nur von kurzer Dauer sind, wenn sich der Fahrzeuginnenraum vor der Temperaturbeeinflussung im thermischen Gleichgewicht befunden hat, so werden diese Lüftergeräusche spätestens bei Kurzfahrstrecken als in zunehmendem Maße störend empfunden.

Der Erfindung liegt die Aufgabe zugrunde, eine Steuerungsvorrichtung für eine Fahrzeuginnenraum-Klimaanlage zu schaffen, die die Klimaanlage nach kürzeren Standzeiten des Fahrzeuges derart steuert, daß die Geräuschbelästigung ohne für die Insassen spürbare Klimakomforteinbußen reduziert sind.

Zur Lösung dieser Aufgabe wird mit der Erfindung eine Steuerungsvorrichtung für eine Fahrzeuginnenraum-Klimaanlage vorgeschlagen, die versehen ist mit

- einer Steuereinheit, die Eingangssignale für zumindest die folgenden Eingangsparameter empfängt, und zwar

  - für den Istwert der Innenraumtemperatur,
  - für den Sollwert der Innenraumtemperatur und
  - ob die Zündung des Fahrzeuges ein- oder ausgeschaltet ist, und die Ausgangssignale für zumindest die folgenden Ausgangsparameter ausgibt, und zwar
  - für den Sollwert der Temperatur der in den Fahrzeuginnenraum einströmenden Luft und
  - für den Sollwert für die Betriebsspannung eines Gebläses zum Zuführen von Luft in den Fahrzeuginnenraum,

- wobei die Steuereinheit auf der Grundlage einer vorgegebenen Berechnungsvorschrift aktuelle Sollwerte für die Ausgangsparameter ermittelt, die einer dem Fahrzeuginnenraum zuzuführenden erforderlichen Wärmeleistung entsprechen, und
- wobei die Steuereinheit die Standzeitdauer zwischen dem letzten Ausschalten der Zündung und deren nächsten Einschalten ermittelt.

Bei einer derartigen Steuerungsvorrichtung ist erfindungsgemäß vorgesehen,

- daß die Steuereinheit auf den Empfang des Eingangssignals für "Zündung Aus" einen Parameter als Speicherwert speichert, der für die zu diesem Zeitpunkt dem Fahrzeuginnenraum zugeführte Wärmeleistung repräsentiv ist,
- daß die Steuereinheit dann, wenn sie innerhalb einer Standzeitdauer, die kleiner ist als eine vorgebbare Maximal-Zeitspanne, ein Eingangssignal für "Zündung Ein" empfängt, einen Startwert für die Gebläsebetriebsspannung anhand des Speicherwerts, der Standzeitdauer und dem aktuell gültigen Sollwert für die Gebläsebetriebsspannung ermittelt, wobei der Startwert zwischen dem Speicherwert und dem Sollwert liegt und umso mehr dem sich aus dem Speicherwert ergebenden Wert für die Gebläsebetriebsspannung gleicht bzw. angenähert ist, je kürzer die Standzeitdauer ist, und umso mehr dem Sollwert de r Gebläsebetriebsspannung gleicht bzw. angenähert ist, je länger die Standzeitdauer ist, und
- daß die Steuereinheit den Wert für die Gebläsebetriebsspannung ausgehend von dem Startwert in Richtung auf den aktuellen Sollwert für die Gebläsebetriebsspannung zumindest dann verändert, wenn sich die Abweichung des Istwerts der Innenraumtemperatur von dem Sollwert mit zunehmender Zeitdauer nicht verkleinert.

Die Grundidee der Erfindung ist die Erkenntnis, daß es wegen der thermischen Pufferwirkung der Innenraumteile und der gesamten Fahrgastzelle eines Fahrzeuges zumindest nach kurzen Standzeiten nur einer geringen Kälte- bzw. Heizleistung bedarf, um die während der Standzeitdauer von dem Sollwert abgewichene tatsächliche Innenraumtemperatur wieder auszuregeln. Daher wird nach der Erfindung das Gebläse nach kurzen Standzeiten weniger stark angesteuert als es der Fall wäre, wenn der grundsätzlichen Klimaphilosophie der Fahrzeug-Klimaanlage gehorchend zur schnellstmöglichen Ausregelung der Innenraumtemperatur der Fall ist. Durch diese erfindungsgemäße Gebläseansteuerung nach kurzen Standzeitdauern wird in für die Fahrzeuginsassen spürbarer Weise der Geräuschkomfort der Klimaanlage gesteigert, ohne daß es zu spürbaren Klimakomforteinbußen kommt. Die gewünschte Innenraumtemperatur stellt sich zwar etwas später ein als in dem Fall, in dem mit maximaler Gebläseleistung gearbeitet wird; durch die erfindungsgemäße Gebläseansteuerung wird jedoch in kürzester Zeit eine Innenraumtemperatur erreicht, die bereits der gewünschten Innenraumtemperatur nahezu entspricht, so daß die noch bestehende Temperaturabweichung von den Fahrzeuginsassen wohl kaum wahrgenommen werden wird, die Geräuschkomfortverbesserung jedoch spürbar hörbar ist.

Wie bei jeder Steuerungsvorrichtung für eine Fahrzeuginnenraum-Klimaanlage so wird auch na ch der Erfindung durch die Steuereinheit laufend bzw. in Zeitabständen aktualisierte Sollwerte für zumindest die Menge der dem Fahrzeuginnenraum zuzuführenden Luft und deren Temperatur berechnet, und zwar gemäß einer vorgegebenen Berechnungsvorschrift (sogenannter Regelalgorithmus). Diese Sollwerte entsprechen der dem Fahrzeuginnenraum in Abhängigkeit von dem Fahrerwunsch (und gegebenenfalls äußeren Einflußfaktoren, wie insbesondere Sonnenstrahlung) zuzuführenden Wärmeleistung. Bei der erfindungsgemäßen Steuerungsvorrichtung wird ein diese Wärmeleistung repräsentierender Wert als Speicherwert abgespeichert, wenn das Fahrzeug ausgeschaltet wird. Wird das Fahrzeug nach einer vergleichsweise kurzen Standzeit wieder gestartet, so geht die Größe des Speicherwerts zusammen mit der Standzeitdauer und dem sich nach der Berechnungsvorschrift ergebenden Sollwert für die Gebläsebetriebsspannung in einen Startwert für die Größe der Gebläsebetriebsspannung ein, mit dem das Gebläse anfangs angesteuert wird. Während dieser Anfangsphase ist der Sollwert der Gebläsebetriebsspannung von dem durch die Steuereinheit repräsentierten Innenraumtemperaturregler "abgekoppelt". Erst nach einer gewissen Zeit, innerhalb derer sich der aktuelle Sollwert für die Gebläsebetriebsspannung dem Startwert angenähert hat oder umgekehrt der Wert für die Gebläsebetriebsspannung ausgehend vom Startwert durch die Steuereinheit in Richtung auf den aktuellen Sollwert verändert worden ist, schaltet die erfindungsgemäße Steuerungsvorrichtung wieder auf ihren Regelalgorithmus zur Ermittlung des Sollwerts für die Gebläsebetriebsspannung um.

Was den Startwert für die Gebläsespannung nach einer kurzen Standzeitdauer betrifft, so ist dieser umso mehr dem sich aus dem Speicherwert ergebenden Wert für die Gebläsebetriebsspannung angenähert, je kürzer die Standzeitdauer ist. Dies ist einsi chtig, wenn man sich einmal überlegt, daß eine verschwindend kurze Standzeitdauer kaum Einfluß auf den vorherigen vom Regelalgorithmus vorgegebenen Sollwert für die Gebläsebetriebsspannung haben sollte. Umgekehrt wird bei längeren Standzeitdauern der Startwert für die Gebläsebetriebsspannung dem nach dem Regelalgorithmus sich ergebenden aktuellen Sollwert entsprechen.

Die Maximalzeitspanne, für die ein klimatisiertes Fahrzeug abgestellt sein darf, damit die erfindurigsgemäße Steuerungsvorrichtung unter der Eingangsprämisse, den Geräuschkomfort ohne spürbare Beeinträchtigungen des Klimakomforts zu verbessern, noch zufriedenstellend arbeitet, ist von Fahrzeugtyp zu Fahrzeugtyp empirisch zu ermitteln. Diesbezügliche Versuche haben gezeigt, daß hier mit Maximal-Zeitspannen von um die 20 Minuten gearbeitet werden kann. Ist das Fahrzeug länger als diese Zeitdauer abgestellt, so besteht je nach Umgebungsbedingungen (Außentemperatur und Sonneneinstrahlung) die Gefahr, daß die Fahrgastzelle aufgrund des vorherigen Betriebszustandes der Klimaanlage über keine nennenswerte gespeicherte Kälte- bzw. Heizleistung mehr verfügt, so daß bei der Vorgabe der Gebläsebetriebsspannung nicht mehr auf den Betriebszustand der Klimaanlage vor dem letzten Ausschalten des Fahrzeuges zurückgegriffen werden sollte.

Was die Frage anbetrifft, ob nach kurzen Standzeitdauern der Startwert für die Gebläsebetriebsspannung für die sich nach dem Starten des Fahrzeuges anschließende Phase verändert werden soll und, wenn ja, in welchem Maße, so ist diesbezüglich ein Kompromiß zwischen dem gewünschten Geräuschkomfort und der Erwartungshaltung der Fahrzeuginsassen bezüglich der Schnelligkeit der Innenraumtemperatur-Ausregelung zu finden. So ist es beispielsweise möglich, das Gebläse der Klimaanlage so lange bei einer dem Startwert entsprechenden Betriebsspannung zu betreiben, bis der sich gemäß Regelalgorithmus ergebende Sollwert gleich dem Startwert ist. Dies kann jedoch in Einzelfällen dazu führen, daß sich die gewünschte Innenraumtemperatur erst mit spürbarer Verzögerung einstellt. Für derartige Fälle ist es dann sinnvoller, den Wert für die Gebläsebetriebsspannung ausgehend vom Startwert um ein vorgebbares Maß pro Zeiteinheit so lange zu erhöhen, bis der sich so ergebende Wert gleich dem sich nach dem Regelalgorithmus ergebenden Sollwert ist. Dieses Verfahren läßt sich auf relativ einfache Weise implementieren und stellt einen guten Kompromiß zwischen der Steigerung des Geräuschkomforts ohne spürbare Beeinträchtigung des Klimakomforts dar. Die sich jeweils einstellenden, durch äußere Einflußfaktoren bedingten Verhältnisse werden noch komfortabler berücksichtigt, wenn man in der Anfangsphase nach einer kurzen Standzeitdauer den Wert für die Gebläsebetriebsspannung ausgehend vom ermittelten Startwert in Abhängigkeit von der Regelabweichung zwischen dem Sollwert und dem Istwert der Innenraumtemperatur verändert. Insbesondere ist es zweckmäßig, in Abhängigkeit von dem Ausmaß und von der Veränderung der Regelabweichung mehr oder weniger Einfluß auf den Wert für die Gebläsebetriebsspannung zu nehmen. Reduziert sich beispielsweise die Regelabweichung mit einer gewünschten Steigung, so kann die Gebläsebetriebsspannung unverändert bleiben, das Gebläse also bei der dem Startwert entsprechenden Spannung betrieben werden. Verringert sich die Regelabweichung dagegen nicht in dem gewünschten Maße, so wird die Gebläsebetriebsspannung kontinuierlich bzw. quasi-kontinuierlich schrittweise angehoben, bis die geforderte (negative) Steigung der Regelabweichung erreicht ist.

Wie bereits oben dargelegt, wird nach der Erfindung beim Abschalten des Fahrzeuges eine Information gespeichert, die für die im Abschaltzeitpunkt zu dem Fahrzeugi nnenraum zugeführte Wärmeleistung und insbesondere für die Wärmespeicherkapazität der Fahrgastzelle repräsentativ ist. Bei dieser Information kann es sich beispielsweise um den Istwert der Innenraumtemperatur unmittelbar vor dem Abschalten des Fahrzeuges handeln. Das erfindungsgemäße Steuerungsverfahren läßt sich jedoch einfacher implementieren, wenn der Wert der Betriebsspannung abgespeichert wird, bei der das Gebläse kurz vor dem Abschalten des Fahrzeuges betrieben worden ist. In diesem Fall läßt sich der Startwert für die Gebläsebetriebsspannung ($V_{Start}$) beispielsweise nach folgender Gleichung berechnen:

$$V_{Start} = V_{Speicher} + \Delta T_{Stand} (V_{Soll} - V_{Speicher}) T_{StandMax'}$$

In dieser Gleichung bedeutet $V_{Speicher}$ die Höhe der Gebläsespannung des letzten Fahrzyklus im Moment des Abstellens der Zündung; diese Gebläsespannung wird während der Nachlaufprozedur der Steuervorrichtung in beispielsweise einem EEPROM gespeichert, während $V_{Soll}$ die Höhe der Gebläsespannung ist, die sich aufgrund des Regleralgorithmus nach dem Wiederstarten des Fahrzeuges einstellen würde. Schließlich ist mit $\Delta T_{Stand}$ die Dauer der Standzeit (in beispielsweise Minuten) zwischen dem letzten Ausschalten und dem Wiedereinschalten der Zündung und $T_{StandMax}$ die maximal zulässige Standzeitspanne (ebenfalls in beispielsweise Minuten) gemeint.

Dies bedeutet, daß beispielsweise bei einer Standzeit von 0 Minuten als Startwert für das Gebläse die gespeicherte Gebläsespannung des letzten Fahrzyklus verwendet wird. Bei einer Standzeit von $T_{StandMax}$ (beispielsweise 20 Minuten) wird die vom Regleralgorithmus vorgegebene Gebläsespannung verwendet. Liegt dagegen die Standzeit zwischen 0 und $T_{StandMax}$ (beispielsweise 20 Minuten) wird linear interpoliert, d.h. je größer die Standzeit ist, desto größer wird auch der Einfluß der Innenraumtemperaturregelung der Steuerungsvorrichtung.

Die vorstehend wiedergegebene Formal zur Berechnung des Startwerts für die Gebläsespannung ist als ein Beispiel zu verstehen, das sich wegen seines Ansatzes, daß Problem auf einen Lineargleichungszusammenhang zu reduzieren, als einfach und damit leicht zu implementieren auszeichnet. Es sind vielerlei Formeln und Gleichungen denkbar, um den Startwert der Gebläsespannung zu errechnen.

Bezüglich der Implementierung am einfachsten ist es, wenn die maximal zulässige Standdauer fest vorgegeben ist. Diesbezüglich haben sich Werte von einigen wenigen 10 Minuten, beispielsweise 20 Minuten, als brauchbar erwiesen. Unter extremen Umgebungsbedingungen, wie beispielsweise extrem niedrige Außentemperaturen und/oder extremen Sonneneinstrahlungen kann es jedoch sinnvoll sein, die maximale Standzeitdauer, nach der beim Wiederstarten des Fahrzeuges noch erfindungsgemäß vorgegangen werden kann, zu verändern. Die Art und Weise der Beeinflussung der Maximalstandzeitdauer in Abhängigkeit von der Außentemperatur und/oder der Sonnenintensitätseinstrahlung läßt sich insbesondere experimentell ermitteln.

Nachfolgend wird anhand der Figuren ein Ausführungsbeispiel der Erfindung näher erläutert. Im einzelnen zeigen:

Fig. 1   schematisch in Seitenansicht den vorderen Teil eines Pkw mit Klimaanlage und

Fig. 2   ein Blockschaltbild des Innenraumtemperaturregelkreises mit unterlagertem Ausblastemperaturregelkreis und der erfindungsgemäß vorgesehenen Steuerung der Gebläsebetriebsspannung in Abhängigkeit von der Standzeitdauer.

Die Klimaanlage 10 zum Versorgen des Innenraums 12 des Fahrzeuges 14 weist einen Außenluft/Frischluft-Ansaugkanal 16 auf, der zusammen mit einem Umluft-Ansaugkanal 18 in den Einlaß 20 eines Gebläses 22 einmündet. Der Umluft-Ansaugkanal 18 ist bei 24 zum bodennahen Bereich 26 des Innenraum 12 hin offen, so daß über diesen Umluft-Ansaugkanal 18 Luft aus dem Innenraum 12 des Fahrzeuges 14 angesaugt wird. Vor dem Einlaß 20 des Gebläses 22 befindet sich eine Umluft/Frischluftklappe 28, die motorisch zwischen einer Umluft-Position und einer Frischluft-Position verstellbar ist. In der Umluft-Position ist der Frischluft-Ansaugkanal 16 durch die Umluft-Frischluftklappe 28 abgesperrt, während in der Frischluft-Position der Umluft-Ansaugkanal 18 abgesperrt ist.

Die vom Gebläse 22 angesaugte Luft wird einer luftseitig gesteuerten Kühl/Heizvorrichtung 29 zugeführt, von wo aus sie über ein Luftverteilungssystem 34 mit Verteilerklappen 35,36 entweder über die Mannanströmöffnungen 38, die Defrosteröffnungen 40 oder die Fußraumausblasöffnungen 42 dem Innenraum 12 zugeführt wird.

Die Klimaanlage 10 umfaßt femer diverse Sensoren, bei denen es sich um einen Außentemperatursensor 44, einen Innenraumtemperatursensor 46, einem Ausblastemperatursensor 48 und einen Sonnensensor 50 handelt. Diese Sensoren 44 bis 50 sind mit den Eingängen einer Steuereinheit 52 einer Steuerungsvorrichtung 54 verbunden, deren Ausgänge mit Stellgliedern für die Umlüft/Frischluftklappe 28, die Mischerklappe 33 der Heiz/Kühlvorrichtung 29 sowie den Luftverteilerklappen 35,36 mit dem Gebläse 22 verbunden sind. Die Steuerungsvorrichtung 54 ist in einem Steuergerät 56 untergebracht, das sich im Fahrzeuginnenraum 12 befindet und neben dem Innenraumtemperatursensor 46 auch diverse Bedienelemente unter anderem für den Sollwert der Innenraumtemperatur aufweist.

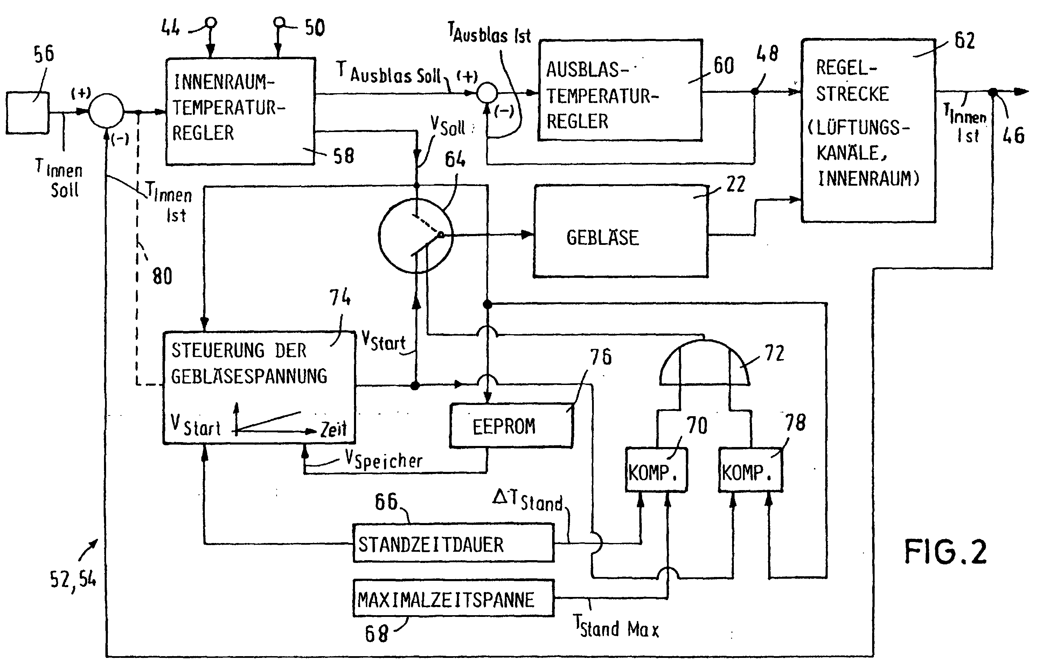

Anhand von Fig. 2 soll nachfolgend die Funktion der Steuereinheit 52 näher erläutert werden.

Die Steuereinheit 52 stellt einen Innenraumtemperaturregler 58 mit unterlagertem Ausblastemperaturregler 60 dar. Der Innenraumtemperaturregler 58 empfängt als Führungsgröße die Differenz zwischen dem am Innenraumtemperatursensor 46 gemessenen Istwert der Innenraumtemperatur $T_{Innenist}$ und dem am Steuergerät 56 eingestellten Sollwert der Innenraumtemperatur $T_{InnenSoll}$. Der Innenraumtemperaturregler 58 gibt einen Sollwert für die Ausblastemperatur $T_{AusblasSoll}$ und einen Sollwert für die Spannung $V_{Soll}$ des Gebläses 22 aus. Der Istwert für die Ausblastemperatur $T_{Ausblasist}$ wird mittels des Ausblastemperatursensors 48 gemessen, und die Regelabweichung zwischen dem Ist- und dem Sollwert für die Ausblastemperatur wird als Führungsgröße dem Ausblastemperaturregler 60 zugeführt. Der sich infolge der Gebläsespannung einstellende Luftstrom und dessen Temperatur werden auf die Regelstrecke 62 gegeben, die im wesentlichen aus dem Innenraum 12 besteht.

In der Verbindung zwischen dem Ausgang des Innenraumtemperaturreglers 58 für den Sollwert der Gebläsespannung $V_{Soll}$ und dem Gebläse 22 befindet sich ein steuerbarer Umschalter 64, mit dem das Gebläse 22 von dem Innenraumtemperaturregler 58 abgekoppelt werden kann, um die Gebläsespannung in Abweichung von dem vom Innenraumtemperaturregler 58 gelieferten Sollwert $V_{Soll}$ vorzugeben. Dies erfolgt in der nachfolgend beschriebenen Weise dann, wenn das Fahrzeug 14 nach Ablauf einer gewissen Standzeitdauer $\Delta T_{Stand}$ wieder gestartet wird.

Die Standzeitdauer $\Delta T_{Stand}$ des Fahrzeuges 14, also die Zeitspanne zwischen dem Abschalten der Zündung und dem nächsten Wiedereinschalten der Zündung wird mittels einer Meßvorrichtung 66 gemessen. Nur für den Fall, daß die mit dieser Zeitmeßvorrichtung 66 gemessene Standzeitdauer $\Delta T_{Stand}$ geringer ist als eine Maximalzeitspanne $T_{StandMax}$ (in Fig. 2 bei 68 angedeutet), wird der Sollwert der Gebläsespannung vom Innenraumtemperaturregler 58 abgekoppelt. Daher wird die gemessene Standzeitdauer $\Delta T_{Stand}$ mittels eines Komparators 70 mit der Maximalzeitspanne $T_{StandMax}$ verglichen. Der Ausgang des Komparators 70 wird dem einen Eingang eines ODER-Gatters 72 zugeführt, dessen Ausgang mit dem steuerbaren Umschalter 64 verbunden ist. Ist die Standzeitdauer $\Delta T_{Stand}$ größer als die Maximalzeitspanne $T_{StandMax}$, so wird vermittels des ODER-Gatters 72 ein Ansteuerungssignal für den Umschalter 64 ausgegeben, so daß dieser den Eingang des Gebläses 22 mit dem Ausgang des Innenraumtemperaturreglers 58 verbindet. Andernfalls wird der Eingang des Gebläses 22 mit einer Steuerschaltung 74 für die Spannung des Gebläses 22 verbunden. Beim Anlassen des Fahrzeuges 14 wird in dieser Steuerschaltung 74 anhand der verstrichenen Standzeitdauer $\Delta T_{Stand}$, dem vom Innenraumtemperaturregler 58 gelieferten Sollwert $V_{Soll}$ für die Gebläsespannung und dem in einem Speicher 76 gespeicherten Sollwert der Gebläsespannung vor dem letzten Ausschalten der Zündung des Fahrzeuges 14 ein Startwert $V_{Start}$ für die Gebläsespannung errechnet. Unter Zugrundelegung einer Maximalzeitspanne von beispielsweise 20 Minuten errechnet sich dieser Startwert $V_{Start}$ wie folgt:

$$V_{Start} = V_{Speicher} + \Delta T_{Stand} (V_{Soll} - V_{Speicher}) T_{20}.$$

In dieser Gleichung ist mit $\Delta T_{Stand}$ eine Standzeitdauer in Minuten und mit $V_{Start}$, $V_{Speicher}$, $V_{Soll}$ Spannungswerte in Volt gemeint.

Der sich auf die obige Weise errechnende Startwert wird unmittelbar nach dem Einschalten der Zündung des Fahrzeuges 14 als Betriebsspannung an das Gebläse 22 angelegt, sofern die Standzeitdauer $\Delta T_{Stand}$ kleiner ist als die Maximalzeitspanne $\Delta T_{StandMax}$. Wie man anhand der Gleichung erkennen kann, ist dieser Startwert kleiner als der vom Innenraumtemperaturregler 58 vorgegebene Wert. Zu diesem Zeitpunkt ist das Gebläse 22 vom Innenraumtemperaturregler 58 abgekoppelt. Um den Innenraumtemperaturregler 58 möglichst "ruckfrei" mit dem Gebläse 22 wieder zu koppeln, sollte der von der Steuerschaltung 74 gelieferte Spannungswert gleich dem Sollwert des Innenraumtemperaturreglers 58 sein. Die Gleichheit beider Werte wird mittels eines Komparators 78 festgelegt, dessen Ausgang mit dem zweiten Eingang des ODER-Gatters 72 verbunden ist. Dem Komparator 78 werden als Eingangsgrößen das Ausgangssignal der Steuerschaltung 74 und das Ausgangssignal des Innenraumtemperaturreglers 58 für die Gebläsespannung zugeführt. Die Angleichung des von der Steuerschaltung 74 ermittelten Werts für die Betriebsspannung des Gebläses 22 und des von dem Innenraumtemperaturregler 58 gelieferten Werts für die Betriebsspannung des Gebläses 22 erfolgt gemäß einer ersten Alternative dergestalt, daß der von der Steuerschaltung 74 gelieferte Spannungswert um ein konstantes vorgegebenes Maß pro Zeiteinheit (vorzugsweise im Bereich 1 bis einigen wenigen Volt pro Minute) angehoben wird. Sobald Gleichheit erzielt ist, schaltet der Umschalter 64 um, so daß das Gebläse 22 wieder mit dem Innenraumtemperaturregler 58 gekoppelt ist. Gemäß einer zweiten Alternative wird in Abhängigkeit von der sich einstellenden Regelabweichung zwischen dem Istwert und dem Sollwert der Innenraumtemperatur in der Steuerschaltung 74 der Spannungswert für das Gebläse 22 verändert. Zu diesem Zweck ist der Eingang des Innenraumtemperaturreglers 58 über die bei 80 angedeutete Verbindungsleitung mit der Steuerschaltung 74 gekoppelt. Verringert sich die Regelabweichung um mindestens ein vorgegebenes (negatives) Mindeststeigungsmaß, so wird der Startwert für die Gebläsespannung in der Steuerschaltung 74 beibehalten. Sollte sich die Regelabweichung um weniger als die Mindeststeigung verringern oder gar erhöhen, so wird der Startwert für die Gebläsespannung $V_{Start}$ in der Steuerschaltung 74 um ein vorgegebenes, von der Veränderung der Regelabweichung insbesondere abhängiges variables Maß erhöht. Auch auf diese Weise kann also eine Angleichung zwischen dem von der Steuerschaltung 74 gelieferten Ausgangswert für die Gebläsespannung und dem von dem Innenraumtemperaturregler 58 gelieferten Gebläsespannungswert realisiert werden, so daß schließlich über das ODER-Gatter 72 und dem Umschalter 64 umgeschaltet werden kann, womit das Gebläse 22 wieder mit dem Innenraumtemperaturregler 58 gekoppelt ist.

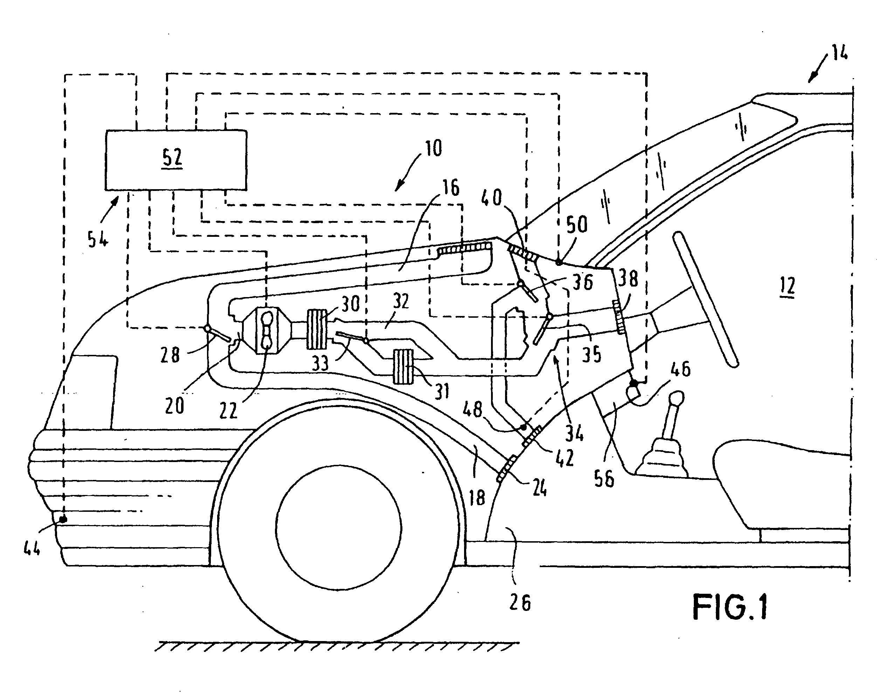

Die hier beschriebene und insbesondere anhand von Fig. 2 erläuterte Steuerungsvorrichtung 54 für die Pkw-Klimaanlage 10 gemäß Fig. 1 hat den Vorteil, daß sich nach kürzeren Standzeitdauer angenehme Lüftergeräusche im Fahrzeuginnenraum 12 einstellen, ohne daß die Insassen Klimakomforteinbußen merklich spüren. Hinter dem hier beschriebenen Steuerungskonzept für die Gebläsespannung nach einem Wiederanlassen des Fahrzeuges verbirgt sich der grundlegende Gedanke, das Gebläse unter Berücksichtigung der von der Fahrgastzelle gespeicherten Kälte- bzw. Heizenergie zu steuern. In die Berechnung zur dem Fahrzeuginnenraum 12 zuzuführenden Wärme- bzw. Kälteleistung geht also nach kurzen Standzeitdauer von Beginn an die von der Fahrgastzelle vom vorherigen Fahrzyklus noch gespeicherte Kälte- bzw. Heizenergie ein. Damit kann das Gebläse im Anschluß an das Wiederstarten des Fahrzeuges 14 bei niedrigeren Spannung betrieben werden, was eine ge ringere "Lärmbelästigung" für die Insassen mit sich bringt. Die Absenkung der Betriebsspannung des Gebläses vom vom Innenraumtemperaturregler 58 gelieferten Sollwert ist derart gewählt, daß sich eine merkliche Geräuschreduktion ohne nachteilig spürbare Klimakomforteinbußen einstellt. Um die für diese Steuerung geeigneten Werte und Parameter zu finden, bedarf es empirischer Untersuchungen mit dem mit der Klimaanlage 10 ausgestatteten Fahrzeug 14, und zwar auch unter extremen Witterungsbedingungen wie großen und niedrigen Außentemperaturen und starker sowie schwacher Sonneneinstrahlung.

Der unterlagerte Ausblastemperaturregler 60 ist bei diesem Eingriff in die Regelung der Gebläsebetriebsspannung insoweit hilfreich, als er gegen den zu Geräuschreduzierungszwecken vorgenommenen Eingriff entgegenwirkt, indem angesichts des reduzierten Luftdurchsatzes stärker erwärmte bzw. stark abgekühlte Luft zugeführt wird. Gerade bei einem Innenraumtemperaturregelkreis mit unterlagerter Ausblastemperaturregelung kann also das mit der Erfindung verfolgte Ziel der spürbaren Verbesserung des Geräuschkomforts bei kaum wahrnehmbarer Einbuße an Klimakomfort besonders effektiv realisiert werden.

**<u>BEZUGSZEICHENLISTE</u>**

| | |
|---|---|
| 10 | Klimaanlage |
| 12 | Innenraum |
| 14 | Pkw |
| 16 | Frischluft/Ansaugkanal |
| 18 | Umluft/Ansaugkanal |
| 20 | Gebläseeinlaß |
| 22 | Gebläse |
| 24 | Umluftkanalauslaß |
| 26 | Bodenbereich des Innenraums |
| 28 | Umluft/Frischluftklappe |
| 29 | Heiz/Kühlvorrichtung |
| 30 | Kühlregister |
| 31 | Heizregister |
| 32 | Heizregister-Bypass |
| 33 | Mischerklappe |
| 34 | Luftverteilungssystem |
| 35 | Verteilerklappe |
| 36 | Verteilerklappe |
| 38 | Mannanströmöffnungen |
| 40 | Defrusteröffnungen |
| 42 | Fußraumausblasöffnungen |
| 44 | Außentemperatursensor |

46 Innenraumtemperatursensor
48 Ausblastemperatursensor
50 Sonnensensor
52 Steuereinheit
54 Steuerungsvorrichtung
56 Steuergerät
58 Innenraumtemperaturregler
60 Ausblastemperaturregler
62 Regelstrecke
64 Umschalter
66 Zeitmeßvorrichtung
68 Maximalzeitspanne
70 Komparator
72 ODER-Gatter.
74 Steuerschaltung
76 EEPROM
78 Komparator
80 Verbindung

**Patentansprüche**

1. Steuerungsvorrichtung für eine Fahrzeuginnenraum-Klimaanlage mit

- einer Steuereinheit (52), die Eingangssignale für zumindest die folgenden Eingangsparameter empfängt, und zwar

  - für den Istwert der Innenraumtemperatur,
  - für den Sollwert der Innenraumtemperatur und
  - ob die Zündung des Fahrzeuges (14) ein- oder ausgeschaltet ist,

  und die Ausgangssignale für zumindest die folgenden Ausgangsparameter ausgibt, und zwar

  - für den Sollwert der Temperatur der in den Fahrzeuginnenraum (12) einströmenden Luft und
  - für den Sollwert für die Betriebsspannung eines Gebläses (22) zum Zuführen von Luft in den Fahrzeuginnenraum (12),

- wobei die Steuereinheit (52) auf der Grundlage einer vorgegebenen Berechnungsvorschrift aktuelle Sollwerte für die Ausgangsparameter ermittelt, die einer dem Fahrzeuginnenraum (12) zuzuführenden erforderlichen Wärmeleistung entsprechen, und
- wobei die Steuereinheit (52) die Standzeitdauer zwischen dem letzten Ausschalten der Zündung und deren nächsten Einschalten ermittelt,

**dadurch gekennzeichnet,**

- **daß** die Steuereinheit (52) auf den Empfang des Eingangssignals für "Zündung Aus" einen Parameter als Speicherwert speichert, der für die zu diesem Zeitpunkt dem Fahrzeuginnenraum zugeführte Wärmeleistung repräsentiv ist,
- **daß** die Steuereinheit (52) dann, wenn sie innerhalb einer Standzeitdauer, die kleiner ist als eine vorgebbare Maximal-Zeitspanne, ein Eingangssignal für "Zündung Ein" empfängt, einen Startwert für die Gebläsebetriebsspannung anhand des Speicherwerts der Standzeitdauer und dem aktuell gültigen Sollwert für die Gebläsebetriebsspannung ermittelt, wobei der Startwert zwischen dem Speicherwert und dem Sollwert liegt und umso mehr dem sich aus dem Speicherwert ergebenden Wert für die Gebläsebetriebsspannung gleicht bzw. angenähert ist, je kürzer die Standzeit dauer ist, und umso mehr dem Sollwert der Gebläsebetriebsspannung gleicht bzw. angenähert ist, je länger die Standzeitdauer ist, und
- **daß** die Steuereinheit den Wert für die Gebläsebetriebsspannung ausgehend von dem Startwert in Richtung auf den aktuellen Sollwert für die Gebläsebetriebsspannung zumindest dann verändert, wenn sich die Abweichung des Istwerts der Innenraumtemperatur von dem Sollwert mit zunehmender Zeitdauer nicht verkleinert.

**2.** Steuerungsvorrichtung nach Anspruch 1, **dadurch gekennzeichnet, daß** die Steuereinheit (52) auf den Empfang des Eingangssignal für "Zündung Aus" den dann aktuell geltenden Wert für die Gebläsebetriebsspannung als Speicherwert speichert und daß der Startwert für die Gebläsebetriebsspannung umso mehr dem Speicherwert gleicht bzw. angenähert ist, je kürzer die Standzeitdauer ist, und umso mehr dem aktuellen Sollwert der Gebläsebetriebsspannung gleicht bzw. angenähert ist, je länger die Standzeitdauer ist.

**3.** Steuerungsvorrichtung nach Anspruch 2, **dadurch gekennzeichnet, daß** der Startwert für die Gebläsebetriebsspannung wie folgt ermittelt wird:

$$V_{Start} = V_{Speicher} + \Delta T_{Stand} (V_{Soll} - V_{Speicher}) T_{StandMax}$$

wobei

- $V_{Start}$ der Startwert für die Gebläsebetriebsspannung,
- $V_{Speicher}$ der Speicherwert,
- $\Delta T_{Stand}$ die tatsächliche Standzeit,
- $V_{Soll}$ der Sollwert für die Gebläsebetriebsspannung und
- $T_{StandMax}$ die maximale Standzeitspanne ist.

**4.** Steuerungsvorrichtung nach einem der Ansprüche 1 bis 3, **dadurch gekennzeichnet, daß** die Steuereinheit (52) den Wert für die Gebläsebetriebsspannung ausgehend von dem Startwert auch dann im Laufe der Zeit verändert, wenn sich die Abweichung des Istwerts der Innenraumtemperatur von deren Sollwert mit zunehmender Zeitdauer verkleinert.

**5.** Steuerungsvorrichtung nach einem der Ansprüche 1 bis 4, **dadurch gekennzeichnet, daß** die Steuereinheit (52) den Startwert für die Gebläsebetriebsspannung zeitgesteuert verändert.

**6.** Steuerungsvorrichtung nach Anspruch 5, **dadurch gekennzeichnet, daß** die Steuereinheit (52) den Startwert für die Gebläsebetriebsspannung um ein vorgebbares Maß pro Zeiteinheit verändert.

**7.** Steuerungsvorrichtung nach einem der Ansprüche 1 bis 4, **dadurch gekennzeichnet, daß** die Steuereinheit (52) den Startwert für die Gebläsebetriebsspannung verändert, und zwar um ein vorgebbares festes Maß pro Zeiteinheit in Abhängigkeit von der Verringerung der Abweichung des Istwerts der Innenraumtemperatur von deren Sollwert.

**8.** Steuervorrichtung nach einem der Ansprüche 1 bis 4, **dadurch gekennzeichnet, daß** die Steuereinheit (52) den Startwert für die Gebläsebetriebsspannung verändert, und zwar um ein von dem Grad der Verringerung der Abweichung des Istwerts der Innenraumtemperatur von deren Sollwert abhängiges Maß pro Zeiteinheit.

**9.** Steuerungsvorrichtung nach einem der Ansprüche 1 bis 8, **dadurch gekennzeichnet, daß** die Maximal-Zeitspanne für die Standzeitdauer fest vorgebbar oder fest vorgegeben ist.

**10.** Steuerungsvorrichtung nach einem der Ansprüche 1 bis 8, **dadurch gekennzeichnet, daß** die Steuereinheit (52) femer Eingangssignale für die Sonneneinstrahlung und/oder die Außentemperatur emp fängt und daß die Steuereinheit die Maximal-Zeitspanne für die Standzeitdauer anhand eines Vorgabewerts und der Sonneneinstrahlung und/oder der Außentemperatur variabel vorgibt.

**Claims**

**1.** Control system for an air-conditioning unit for the interior of a vehicle comprising

- a control unit (52), which receives input signals specifically in respect of at least the following input parameters,

    - the actual value of the temperature inside the vehicle,
    - the desired value in respect of the temperature inside the vehicle and
    - whether the ignition of the vehicle (14) is switched on or off,

and which produces output signals specifically in respect of at least the following output parameters,

- the desired value in respect of the temperature of the air flowing into the interior (12) of the vehicle and
- the desired value in respect of the operating voltage of a blower (22) for supplying air into the interior (12) of the vehicle,
- the control unit (52) determining, based on a predetermined method of calculation, current desired values for the output parameters, which correspond to the heating power which is required to be supplied to the interior (12) of the vehicle, and
- the control unit (52) determining the standing time between the last switching-off of the ignition and its subsequent switching-on,

**characterized in that,**

- on reception of the input signal for "ignition off", the control unit (52) stores as stored value a parameter that is representative of the heating power supplied to the interior of the vehicle at this time,
- **in that** when, within a period of standing time which is less than a predeterminable maximum period, the control unit (52) receives an input signal for "ignition on", it determines a starting value for the operating voltage of the blower based on the stored value, the standing time and the current desired value for the operating voltage of the blower, in which case the starting value lies between the stored value and the desired value and, the shorter the standing time, the more said starting value equals or approximates the value resulting from the stored value in respect of the operating voltage of the blower, and the longer the standing time, the more it equals or approximates the desired value in respect of the operating voltage of the blower, and
- **in that** the control unit alters the value for the operating voltage of the blower, proceeding from the starting value towards the current desired value for the operating voltage of the blower, at least when the deviation of the actual value of the temperature inside the vehicle from the desired value does not diminish with increasing length of time.

2. Control system according to Claim 1, **characterized in that,** on reception of the input signal for "ignition off", the control unit (52) stores as stored value the value then prevailing in respect of the operating voltage of the blower, and **in that** the shorter the standing time, the more the starting value for the operating voltage of the blower equals or approximates the stored value, and the longer the standing time, the more it equals or approximates the current desired value for the operating voltage of the blower.

3. Control system according to Claim 2, **characterized in that** the starting value for the operating voltage of the blower is determined as follows:

$$V_{Start} = V_{Store} + \Delta T_{Stand} (V_{desired} - V_{Store}) T_{Stand/max}$$

in which

- $V_{Start}$ is the starting value for the operating voltage of the blower,
- $V_{Store}$ is the stored value,
- $\Delta T_{Stand}$ is the actual standing time,
- $V_{desired}$ is the desired value for the operating voltage of the blower and
- $T_{Stand/max}$ is the maximum standing time.

4. Control system according to one of Claims 1 to 3, **characterized in that,** over the course of time, the control unit (52) also alters the value for the operating voltage of the blower proceeding from the starting value when the deviation of the actual value of the temperature inside the vehicle from its desired value diminishes with increasing length of time.

5. Control system according to one of Claims 1 to 4, **characterized in that** the control unit (52) alters the starting value for the operating voltage of the blower as a function of time.

6. Control system according to Claim 5, **characterized in that** the control unit (52) alters the starting value for the operating voltage of the blower by a predeterminable amount per unit of time.

7. Control system according to one of Claims 1 to 4, **characterized in that** the control unit (52) alters the starting value for the operating voltage of the blower, more specifically by a predeterminable fixed amount per unit of time as a function of the diminishing deviation of the actual value of the temperature inside the vehicle from its desired value.

8. Control system according to one of Claims 1 to 4, **characterized in that** the control unit (52) alters the starting value for the operating voltage of the blower, more specifically by an amount per unit of time which is dependent on the extent to which the deviation of the actual value of the temperature inside the vehicle from its desired value is diminishing.

9. Control system according to one of Claims 1 to 8, **characterized in that** the maximum period for the standing time can be, or is, permanently preset.

10. Control system according to one of Claims 1 to 8, **characterized in that** the control unit (52) also receives input signals in respect of exposure to the sun's rays and/or the outside temperature, **and in that** the control unit variably presets the maximum period for the standing time based on a set value and exposure to the sun's rays and/or the outside temperature.

**Revendications**

1. Dispositif de commande pour une installation de climatisation pour l'espace intérieur d'un véhicule, comportant

   - une unité de commande (52), qui reçoit des signaux d'entrée pour au moins les paramètres d'entrée suivants, à savoir
   - pour la valeur réelle de la température de l'espace intérieur,
   - pour la valeur de consigne de la température de l'espace intérieur, et
   - pour savoir si l'allumage du véhicule (14) est branché ou débranché,

   et délivre les signaux de sortie pour au moins les paramètres de sortie suivants, et ce

   - pour la valeur de consigne de la température de l'air pénétrant dans l'espace intérieur (12) du véhicule, et
   - pour la valeur de consigne pour la tension de fonctionnement d'un ventilateur (22) pour envoyer de l'air dans l'espace intérieur (12) du véhicule,
   - dans lequel l'unité de commande (52) détermine, sur la base d'une prescription prédéterminée de calcul, des valeurs de consigne actuelles pour les paramètres de sortie, qui correspondent à une puissance thermique nécessaire devant être envoyée à l'espace intérieur (12) du véhicule, et
   - dans lequel l'unité de commande (52) détermine la durée d'attente entre le dernier débranchement de l'allumage et le branchement immédiatement suivant de l'allumage,

   **caractérisé en ce**

   - **que** lors de la réception du signal de commande pour "arrêt de l'allumage", l'unité de commande (52) mémorise un paramètre en tant que valeur de mémoire, qui est représentative de la puissance thermique envoyée à cet instant dans l'espace intérieur du véhicule,
   - **que** lorsque l'unité de commande (52) reçoit un signal d'entrée pour "branchement de l'allumage" pendant une durée d'attente qui est inférieure à un intervalle de temps maximum pouvant être prédéterminé, l'unité de commande détermine une valeur de départ pour la tension de fonctionnement du ventilateur sur la base de la valeur de la durée d'attente en mémoire et de la valeur de consigne actuellement valable pour la tension de fonctionnement du ventilateur, auquel cas la valeur de départ se situe entre la valeur en mémoire et la valeur de consigne et est égale à ou se rapproche d'autant plus de la valeur, qui est obtenue à partir de la valeur en mémoire, pour la tension de fonctionnement du ventilateur, que la durée d'attente est brève, et est égale ou se rapproche d'autant plus de la valeur de consigne de la tension de fonctionnement du ventilateur, que la durée d'attente est longue ,et
   - **que** l'unité de commande modifie la valeur de la tension de fonctionnement du ventilateur depuis la valeur de départ en direction de la valeur de consigne actuelle pour la tension de fonctionnement du ventilateur au moins lorsque l'écart de la valeur réelle de la température de l'espace intérieur par rapport à la valeur de consigne ne diminue pas lorsque la durée augmente.

**2.** Dispositif de commande selon la revendication 1, **caractérisé en ce qu'**à la réception du signal d'entrée pour "arrêt de l'allumage", l'unité de commande (59) mémorise la valeur actuellement valable pour la tension de fonctionnement du ventilateur, en tant que valeur en mémoire, et que la valeur de départ pour la tension de fonctionnement du ventilateur est égale ou se rapproche d'autant plus de la valeur en mémoire que la durée d'attente est brève, et est égale ou se rapproche d'autant plus de la valeur de consigne actuelle de la tension de fonctionnement du ventilateur que la durée d'attente est longue.

**3.** Dispositif de commande selon la revendication 2, **caractérisé en ce que** la valeur de départ de la tension de fonctionnement du ventilateur est déterminée comme suit:

$$V_{départ} = V_{mémoire} + \Delta T_{attente} \ (V_{consigne} - V_{mémoire}) \ T_{attentemax}$$

- $V_{départ}$, valeur de départ de la tension de fonctionnement du ventilateur,
- $V_{mémoire}$, valeur en mémoire,
- $\Delta T_{attente}$, durée d'attente effective,
- $V_{consigne}$, valeur de consigne de la tension de fonctionnement du ventilateur, et
- $T_{attentemax}$, temps d'attente maximum.

**4.** Dispositif de commande selon l'une quelconque des revendications 1 à 3, **caractérisé en ce que** l'unité de commande (59) modifie la valeur de la tension de fonctionnement du ventilateur à partir de la valeur de départ également pendant l'intervalle de temps, pendant lequel l'écart de la valeur réelle de la température de l'espace intérieur par rapport à la valeur de consigne de sa température diminue lorsque la durée augmente.

**5.** Dispositif de commande selon l'une quelconque des revendications 1 à 4, **caractérisé en ce que** l'unité de commande (52) modifie la valeur de départ par la tension de fonctionnement du ventilateur.

**6.** Dispositif de commande selon la revendication 5, **caractérisé en ce que** l'unité de commande (52) modifie la valeur de départ pour la tension de fonctionnement du ventilateur, et ce d'une valeur pouvant être prédéterminée par unité de temps.

**7.** Dispositif de commande selon l'une quelconque des revendications 1 à 4, **caractérisé en ce que** l'unité de commande (52) modifie la valeur de départ de la tension de fonctionnement du ventilateur, et ce d'une première valeur pouvant être prédéterminée par unité de temps en fonction de la réduction de l'écart entre la valeur réelle de la température dans l'espace intérieur et sa valeur de consigne.

**8.** Dispositif de commande selon l'une quelconque des revendications 1 à 4, **caractérisé en ce que** l'unité de commande (52) modifie la valeur de départ de la tension de fonctionnement du ventilateur, et ce d'une valeur par unité de temps, qui dépend du degré de réduction de l'écart entre la valeur réelle de la température dans l'espace intérieur et de sa valeur de consigne.

**9.** Dispositif de commande selon l'une quelconque des revendications 1 à 8, **caractérisé en ce que** l'intervalle de temps maximum pour la durée d'attente peut être prédéterminé de façon fixe ou est prédéterminé de façon fixe.

**10.** Dispositif de commande selon l'une quelconque des revendications 1 à 8, **caractérisé en ce que** l'unité de commande (52) reçoit en outre des signaux d'entrée pour le rayonnement solaire et/ou la température extérieure, et que l'unité de commande prédétermine de façon variable l'intervalle de temps maximum pour la durée d'attente sur la base d'une valeur de prédétermination et du rayonnement solaire et/ou de la température extérieure.

FIG.1

FIG.2